# EUROPÄISCHE PATENTANMELDUNG

(11) **EP 2 116 671 A1**
(43) Veröffentlichungstag der Anmeldung: **11.11.2009**
(21) Anmeldenummer: 08008473.4
(22) Anmeldetag: 06.05.2008
(51) Int. Cl.: E04H 4/10, B60P 7/04, E06B 9/46, F16B 2/02, F16B 5/06

(54) **Strebe für eine Schwimmbadabdeckung**

(71) Anmelder: Bieri Alpha Covers AG, 6022 Grosswangen (CH)
(72) Erfinder: Blaser, Torsten, 6052 Hergiswil (CH)
(74) Vertreter: Lemcke, Brommer & Partner

(57) **Zusammenfassung**

Eine Strebe (1) für eine Abdeckung, insbesondere für eine Schwimmbadabdeckung mit einer Abdeckplane (25,26) insbesondere einer textilen KunststofffoIie, wobei die Strebe (1) zum Tragen der Abdeckplane (25,26) beispielsweise über dem Wasser gefüllten Bereich eines Schwimmbeckens vorgesehen ist, zeichnet sich dadurch aus, dass die Strebe (1) als mehrteiliges Profilelement ausgebildet ist, von dessen Einzelteilen wenigstens ein erstes (2) und ein zweites (3) im zusammengefügten Zustand eine Klemmvorrichtung zum Klemmen der Abdeckplane (25,26) bilden.

## Beschreibung

Die vorliegende Erfindung betrifft eine Strebe nach dem Oberbegriff des Patentanspruchs 1 für die Abdeckung einer Öffnung oder Vertiefung, insbesondere für eine Schwimmbadabdeckung mit einer Abdeckplane, insbesondere einer textilen Kunststofffolie, nach Art einer Sicherheitsabdeckung, wobei die Strebe zum Tragen der Abdeckplane über der Öffnung oder Vertiefung und insbesondere über dem Wasser gefüllten Bereich eines Schwimmbeckens vorgesehen ist.

Weiterhin betrifft die vorliegende Erfindung eine Abdeckung nach dem Oberbegriff des Patentanspruchs 14, insbesondere eine Schwimmbadabdeckung, mit einer Abdeckplane nach Art einer Sicherheitsabdeckung.

Abdeckungen, insbesondere Schwimmbadabdeckungen der eingangs genannten Art und entsprechende Streben hierfür sind bekannt. Derartige (Schwimmbad-)Abdeckungen lassen sich auch als Rollschutz bezeichnen, da die Abdeckplane, die beispielsweise zum Abdecken des Wasser gefüllten Bereichs eines Schwimmbads vorgesehen ist, zusammen mit den sie tragenden (Quer-)Streben eingerollt wird, wenn das Schwimmbad benutzt wird und dementsprechend nicht abgedeckt ist.

Aus der EP 0 465 430 B1 ist eine gattungsgemäße Schwimmbadabdeckung bekannt, bei der die Streben in Kedersäume einer textilverstärkten Kunststofffolie eingesteckt sind. Hierbei ist als nachteilig anzusehen, dass das Herstellen der genannten Kedersäume relativ aufwändig und somit kostenintensiv ist. Au-Kunststofffolienmaterial auf die eigentliche Schwimmbadabdeckung erzeugt, so dass weiterhin auch hinsichtlich der verwendbaren Kunststoffmaterialien Beschränkungen bestehen.

Eine erforderliche Verspannbarkeit der Schwimmbadabdeckung gemäß EP 0 465 430 B1 wird dadurch erreicht, dass die Längsränder der Schwimmbadabdeckung verstärkt ausgeführt und zu diesem Zweck insbesondere umgeschlagen und verschweißt sind. Zum Verspannen werden Spanngurte in Ösen an der Abdeckung selbst eingehängt und entsprechend angezogen. Auch in diesem Zusammenhang ist als nachteilig anzusehen, dass die genannte Verstärkung der Randbereiche der Abdeckung relativ aufwändig und kostenintensiv ist, wobei die erforderliche Verschweißbarkeit des Materials wiederum Einschränkungen bei der Materialwahl nach sich zieht.

Auch beim Gegenstand der CH 675 445 A5 sind Tragstäbe für eine Schwimmbadabdeckfolie in Taschen der Abdeckfolie eingesteckt, deren Herstellung aufwändig und entsprechend kostenintensiv ist.

Aus der DE 693 11 940 T2 ist dagegen eine Abdeckvorrichtung für ein Becken, insbesondere für ein Schwimmbad bekannt, bei der Teile der Abdeckfolie so genannte Querlieken umfassen, wie sie beispielsweise von Schiffsegeln bekannt sind, wobei die genannten Lieken in entsprechende Ausnehmungen der Querstreben angebracht werden, um auf diese Weise eine durchgängige Abdeckung aus Querstreben und Abdeckfolienteilen zu erzeugen. Auch hierbei ist als nachteilig anzusehen, dass das Ausbilden der genannten Lieken mit einem erhöhten fertigungstechnischen Aufwand verbunden ist. Entsprechend aufwändig gestaltet sich auch die Reparatur beschädigter Abdeckfolienteile, insbesondere im Falle einer Beschädigung der Lieken, welche aufwändig ausgebessert oder vollständig ersetzt werden müssen, um die vorgeschlagene Beckenabdeckung weiterhin nutzen zu können.

Der Erfindung liegt die Aufgabe zugrunde, eine Strebe für eine Abdeckung einer Öffnung oder Vertiefung mit einer Abdeckplane, insbesondere einer textilen Kunststofffolie, sowie eine mit Hilfe solcher Streben gebildete Abdeckung anzugeben, welche die oben genannten Nachteile des Standes der Technik verzugeben, welche die oben genannten Nachteile des Standes der Technik vermeidet und dabei insbesondere einfacher und kostengünstiger herstellbar ist, wobei in diesem Zusammenhang insbesondere möglichst keine Beschränkungen bei der Wahl von für die Abdeckplane zu verwendenden Materialien bestehen soll.

Die Erfindung löst diese Aufgabe mittels einer Strebe für die Abdeckung einer Öffnung oder Vertiefung mit den Merkmalen des Patentanspruchs 1 sowie mittels einer Abdeckung mit den Merkmalen des Patentanspruchs 14.

Vorteilhafte Weiterbildungen der Erfindung sind jeweils Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist eine Strebe für die Abdeckung einer Öffnung oder Vertiefung mit einer Abdeckplane, insbesondere einer textilen Kunststofffolie, wobei die Strebe zum Tragen der Abdeckplane über der Öffnung oder Vertiefung, insbesondere über dem Wasser gefüllten Bereich eines Schwimmbeckens vorgesehen ist, **dadurch gekennzeichnet, dass** die Strebe als mehrteiliges Profilelement ausgebildet ist, von dessen Einzelteilen wenigstens ein erstes und ein zweites im zusammengefügten Zustand eine Klemmvorrichtung zum Klemmen der Abdeckplane bilden.

Entsprechend ist eine erfindungsgemäße Abdeckung mit einer Abdeckplane, insbesondere einer textilen Kunststofffolie, gekennzeichnet durch wenigstens eine erfindungsgemäße Strebe, wobei die Strebe zum Tragen der Abdeckplane über einer Öffnung oder Vertiefung und insbesondere über dem Wasser gefüllten Bereich eines Schwimmbeckens vorgesehen ist.

Ein Grundgedanke der vorliegenden Erfindung ist demnach darin zu sehen, dass zum Verbinden der Streben mit der Abdeckplane einer Abdeckung im Wesentlichen keine (kosten-)aufwändigen Veränderungen an der Abdeckplane erforderlich sind, wie das bei der Ausbildung der nach dem Stand der Technik vorgesehenen Taschen oder Lieken regelmäßig der Fall war. Vorliegend erfolgt durch Klemmen der Abdeckplane zwischen den Einzelteilen eines mehrteiligen Profilelements, welches die erfindungsgemäße Strebe bildet.

Erfindungsgemäß lassen sich die Ränder von Abdeckplanenteilen einfach zwischen die genannten Einzelteile des mehrteiligen Streben-Profilelements einlegen, welche anschließend zusammengefügt werden und die genannten Abdeckplanenteile zwischen sich einklemmen. Eine wie auch immer geartete Randbearbeitung der Abdeckplanenteile ist dabei grundsätzlich nicht erforderlich, was die Herstellungskosten reduziert und darüber hinaus quasi beliebige Planenmaterialien zur Herstellung der Abdeckung nutzbar macht.

Zu Reparaturzwecken lassen sich die geklemmten Abdeckplanenteile grundsätzlich nach Öffnen des Profilelements aus diesem entnehmen und in einfacher Weise ersetzen, wobei sogar möglich ist, nur einen beschädigten Bereich des jeweiligen Abdeckplanenteils abzuschneiden und dieses anschließend wieder zwischen den Einzelteilen des Profilelements einzuklemmen.

Das erfindungsgemäße Streben-Profilelement ist bezogen auf die Profileinzelteile vorzugsweise derart ausgebildet, dass bei deren Zusammenfügen eine hinreichend starke Federwirkung erzeugt wird, die verhindert, dass eine geklemmte Abdeckplane aus dem Profilelement ohne weiteres herausgezogen werden kann. Dabei wird vorteilhafter Weise mindestens eine Zugfestigkeit von etwa 4 kg/10 cm garantiert, was der Gewichtskraft einer Person von ca. 80 kg entspricht.

Eine erste Weiterbildung der erfindungsgemäßen Strebe sieht vor, dass zum Klemmen der Abdeckplane das erste Profileinzelteil und das zweite Profileinzelteil miteinander verrastet werden, wozu eines der genannten Profileinzelteile wenigstens eine Rastausnehmung und das andere Profileinzelteil zumindest einen entsprechenden Rastvorsprung aufweist.

Um die weiter oben erwähnte Austauschbarkeit von Abdeckplanenteilen zu erreichen, sieht eine andere Weiterbildung der erfindungsgemäßen Strebe vor, dass das erste Profileinzelteil und das zweite Profileinzelteil zum Entnehmen der Abdeckplane insbesondere im Wesentlichen zerstörungsfrei voneinander trennbar sind.

Aus ästhetischen Gründen sowie zum Zwecke einer besseren Rollbarkeit sieht eine andere Weiterbildung der erfindungsgemäßen Strebe vor, dass eines der Profileinzelteile eine abgerundete, im Querschnitt insbesondere teilkreisförmige Außenkontur aufweist. Dagegen kann das andere Profilteil bezogen auf das genannte abgerundete Profilteil eine relativ ebene Außenkontur aufweisen.

Wie oben erwähnt, erfolgt die aus Sicherheitsgründen notwendige Verspannung einer Schwimmbadabdeckung nach dem Stand der Technik an der Abdeckplane selbst, wozu diese in entsprechend aufwändiger Weise verstärkt ausgebildet ist. Dagegen sieht eine andere bevorzugte Weiterbildung der erfindungsgemäßen Strebe vor, dass das erste Profileinzelteil und/oder das zweite Profileinzelteil wenigstens eine Nut aufweist, die längs der Erstreckung des jeweiligen Profileinzelteils ausgebildet ist und in die sich Nutensteine mit einer Ösenstruktur zum Einhaken von Spanngurten einbringen lassen. Auf diese Weise erfolgt die Verspannung der (Schwimmbad-)Abdeckung direkt an deren Streben, so dass auch in den Randbereichen der Abdeckplane keine aufwändige und kostenintensive Ausbildung von Verstärkungsstrukturen erforderlich ist.

Vorzugsweise sind die genannten Nuten jeweils am Rand der Außenkontur des abgerundeten Profileinzelteils angeordnet.

Vorteilhafterweise weisen das erste Profileinzelteil und das zweite Profileinzelteil an ihren Fügeflächen, das heißt denjenigen Flächen, die im zusammengefügten Zustand des Profilelements einander zugewandt sind, komplementäre Strukturen auf, die zum Klemmen der Abdeckplane dienen.

Die genannten komplementären Strukturen umfassen beispielsweise wenigstens eine Längsausnehmung mit insbesondere dreieckförmigem oder kegelstumpfförmigem Querschnitt an dem ersten oder zweiten Profileinzelteil und einen entsprechend komplementären Längsvorsprung an dem anderen Profileinzelteil.

Das erste Profileinzelteil und/oder das zweite Profileinzelteil können an wenigstens einem Ende als Profilhohlteil ausgebildet sein, wobei ein Endstück zum insbesondere gemeinsamen Verschließen der Profileinzelteile an dem entsprechenden Ende vorgesehen ist. Das Verschließen kann insbesondere durch Einstecken des genannten Endstücks in das Profileinzelteil bzw. in die Profileinzelteile erfolgen, insbesondere durch Einstecken in die weiter oben genannte Nut.

Um Abnutzungen der Strebe bei Bewegungen über den Rand der abzudeckenden Öffnung oder Vertiefung, z.B. über den Beckenrand eines Schwimmbeckens zu vermeiden, sieht eine andere Weiterbildung der erfindungsgemäßen Strebe vor, dass eines der Profileinzelteile an seiner Außenfläche bezogen auf den zusammengefügten Zustand der Strebe wenigstens eine Befestigungsstruktur aufweist, an der ein Randauflageteil der Abdeckung befestigbar ist. Bei der genannten Befestigungsstruktur kann es sich insbesondere um eine hinterschnittene Längsausnehmung handeln.

Das weiter oben genannte Endstück, welches zum Verschließen des Profileinzelteils bzw. der Profileinzelteile in dieselben eingesteckt wird, kann im Zuge einer anderen Weiterbildung der Erfindung eine Struktur aufweisen, die zum Verbinden mit einer Antriebseinheit für die Abdeckung dient, insbesondere eine Kantwellenstruktur.

Im Zuge einer anderen Weiterbildung der vorliegenden Erfindung kann auch vorgesehen sein, dass nicht die Strebe selbst auf dem genannten Rand aufliegt, sondern dass das in die Strebe eingesetzte Endstück eine Auflagefläche zum Auflegen auf einen Rand der Öffnung oder Vertiefung aufweist. Während die Streben selbst vorzugsweise in Aluminium oder einem vergleichbaren Werkstoff ausgebildet sind, kann das Endstück oder das weiter oben genannte Randauflageteil beispielsweise in Kunststoff ausgebildet sein, so dass es im Falle einer Beschädigung durch Reibung auf dem Rand leicht und ohne größeren Kostenaufwand ersetzbar ist.

Eine Weiterbildung der erfindungsgemäßen Abdeckung zeichnet sich durch eine im Wesentlichen regelmäßige Abfolge von Abdeckplanenbahnen oder - teilen und erfindungsgemäßen Streben aus, wobei die Breite der Abdeckplanenbahnen insbesondere ca. 1,3 m beträgt, wobei gegebenenfalls am Rand der Abdeckung Bahnen mit abweichender Breite verwendet werden können.

Eine derartige Ausgestaltung ist insbesondere deshalb besonders vorteilhaft, weil das verwendete Abdeckplanenmaterial am Markt typischerweise nur in bestimmten Breiten verfügbar ist, so dass durch die beschriebene regelmäßige Abfolge von Abdeckplanenbahnen und Streben, an denen das Abdeckplanenmaterial erfindungsgemäß - wie beschrieben - klemmend gehalten ist, lediglich ein Zuschneiden des Abdeckplanenmaterials auf die gewünschte (Becken-)Breite erforderlich ist. Mit anderen Worten, im Zuge der beschriebenen Weiterbildung der vorliegenden Erfindung werden zum Abdecken der Öffnung oder Vertiefung eben so viele erfindungsgemäße Streben verwendet, dass sich bei Verwendung von Abdeckplanenbahnen mit Standardbreite gerade eine im Wesentlichen vollständige Abdeckung der Öffnung oder Vertiefung ergibt. Lediglich im Randbereich wird es dann erforderlich sein, eine Abdeckplanenbahn mit abweichender, in der Regel geringerer Breite vorzusehen.

Die vorstehend beschriebene neuartige Abdeckung stellt somit eine günstige Alternative zu bestehenden Modellen dar und lässt sich aus den genannten Gründen ohne spezielle Fabrikationsmaschinen, wie Hochfrequenz- oder Heißluftmaschinen, herstellen. Die Herstellung wird somit in vorteilhafter Weise von einem bestimmten Fabrikationsstandort im Wesentlichen unabhängig.

Durch die beschriebene Austauschbarkeit von Abdeckplanenbahnen ergibt sich eine einfache Reparierbarkeit der vorgeschlagenen Abdeckung.

Da die Abspannung - wie beschrieben - nur noch an den Streben selbst erfolgt, ist keine kostenintensive Ausbildung von Kedern längs am Rollschutz mehr erforderlich.

Insgesamt wird die Fertigung des erfindungsgemäßen Rollschutzes von der Stoffqualität und dem verwendeten Werkstoff grundsätzlich unabhängig.

Durch das erfindungsgemäße Klemmen der Abdeckplanenbahnen muss das entsprechende Material nur noch auf die korrekte Länge zugeschnitten werden; ein Schweißen von Taschen, Kedern oder dergleichen ist nicht mehr erforderlich.

Durch die beschriebene Abspannung der Abdeckung an den Streben selbst müssen vorteilhafterweise an der Abdeckplane keine Abspannungen angeschweißt werden. Wenn zudem die Befestigungsstrukturen für die Abspannung aufgrund der genannten Nutensteine längs der Streben verschiebbar, ergibt sich auch hinsichtlich der Abspannpositionen am Rand der Öffnung oder Vertiefung eine größtmögliche Flexibilität ergibt.

Durch das beschriebene Vorsehen eines Auflageschutzes an den Streben lässt sich deren Lebensdauer quasi nach Belieben verlängern.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: eine Querschnittsansicht einer erfindungsgemäßen Strebe speziell für eine Schwimmbadabdeckung im getrennten Zustand ihrer Einzelteile;
- Figur 2: die Strebe aus Figur 1 im zusammengefügten Zustand Ihrer Einzelteile und mit geklemmter Abdeckplane;
- Figur 3: eine zusammengefügte, erfindungsgemäße Strebe mit Endstücken, Randauflage und geklemmten Abdeckplanenbahnen;
- Figur 4: eine zusammengefügte, erfindungsgemäße Strebe im Wesentlichen gemäß Figur 3 mit Befestigungsmitteln für eine Spannvorrichtung; und
- Figur 5: eine Teilansicht eines Endbereichs einer erfindungsgemäßen Strebe mit zugehörigem Endstück.

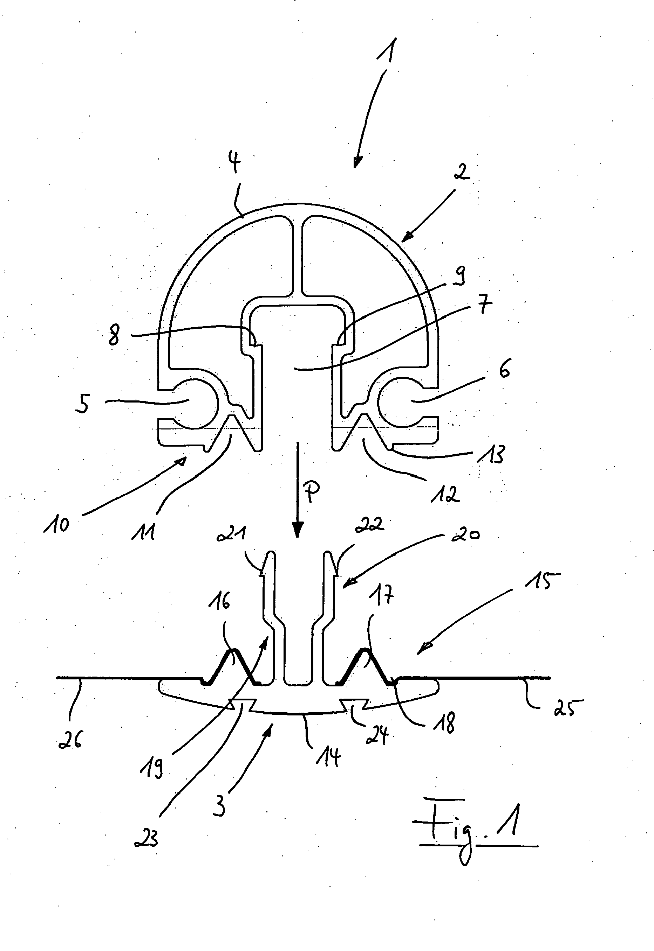

Figur 1 zeigt einen Querschnitt durch eine erfindungsgemäße Strebe für eine Schwimmbadabdeckung, wobei die Strebe in ihrer Gesamtheit mit dem Bezugszeichen 1 bezeichnet und darüber hinaus nicht auf die vorliegend rein exemplarisch genannte Verwendung zur Abdeckung eines Schwimmbeckens beschränkt ist, sondern zur Abdeckung quasi beliebiger Öffnungen und Vertiefungen einsetzbar ist.

Die Strebe 1 ist als mehrteiliges Profilelement ausgebildet und besteht gemäß der gezeigten Ausführungsform aus zwei Profileinzelteilen 2, 3, die vorliegend ohne Beschränkung der Allgemeinheit auch als erstes Profileinzelteil 2 bzw. zweites Profileinzelteil 3 bezeichnet werden.

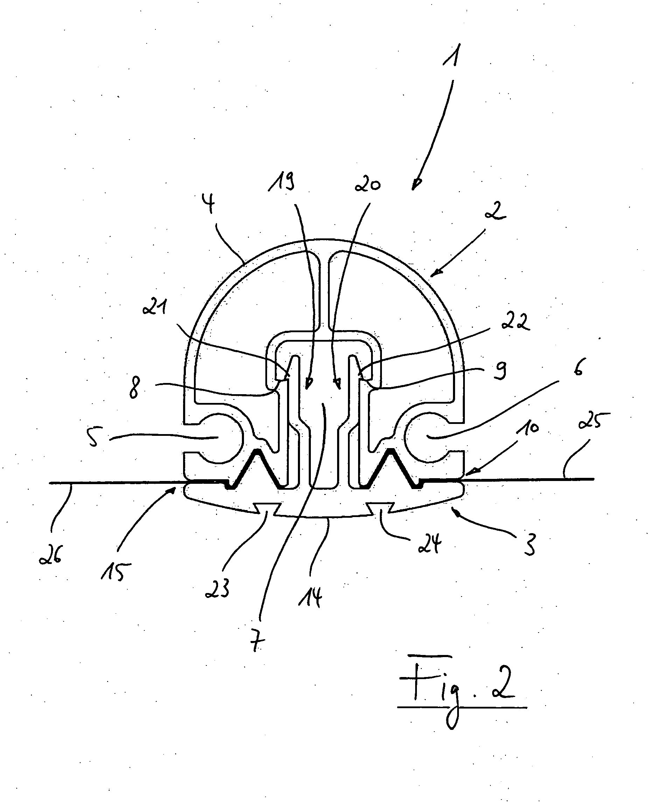

In der Darstellung gemäß Figur 1 sind die Profileinzelteile 2, 3 im getrennten Zustand gezeigt. Dagegen zeigt die Abbildung gemäß Figur 2 die erfindungsgemäße Strebe 1 aus Figur 1, wobei sich die Profileinzelteile 2, 3 in ihrem zusammengefügten Zustand befinden. Hierauf wird weiter unten noch genauer eingegangen.

Das erste Profileinzelteil 2 ist als Hohlprofilteil ausgebildet und weist an seiner Oberseite eine im Querschnitt in etwa halbkreisförmige Außenkontur 4 auf, an die sich auf beiden Seiten eine seitlich nach außen öffnende Ausnehmung oder Nut 5 bzw. 6 nach Art einer Kederschiene anschließt. Weiterhin weist das erste Profileinzelteil 2 eine zentrale Ausnehmung 7 auf, deren Querschnitt nach innen hin seitlich verbreitert ist, so dass Absätze 8, 9 resultieren, auf deren Funktion weiter unten noch genauer eingegangen wird.

Die Nuten 5, 6 weisen gemäß dem gezeigten Ausführungsbeispiel und ohne Beschränkung der Allgemeinheit einen im Wesentlichen kreisförmigen Querschnitt auf.

An seiner Unterseite, das heißt der abgerundeten Außenkontur 4 gegenüberliegend weist das erste Profileinzelteil 2 eine strukturierte Fügefläche 10 auf, auf deren Ausgestaltung und Funktion nachfolgend noch genauer eingegangen wird.

Links und rechts der zentralen Ausnehmung 7 sind an der Fügefläche 10 Längsausnehmungen 11, 12 mit im Wesentlichen dreieckförmigem Querschnitt ausgebildet, wobei Kanten der Längsausnehmungen 11, 12, von denen in Figur 1 nur eine 13 explizit bezeichnet ist, gegenüber einer gedachten Ebene der Fügefläche 10 hervorspringen.

Verglichen mit dem ersten Profileinzelteil 2 ist das zweite Profileinzelteil 3 zunächst relativ eben bzw. mit einer nur leichten Krümmung seiner Außenkontur 14 ausgebildet.

Das zweite Profileinzelteil 3 ist zum formschlüssigen Zusammenwirken mit dem ersten Profileinzelteil 2 ausgebildet und weist demnach an seiner dem ersten Profilteil 2 zugewandten Fügefläche 15 Längsvorsprünge 16, 17 auf, welche zu den Längsausnehmungen 11, 12 des ersten Profileinzelteils 2 komplementär ausgebildet sind. Seitlich der Längsvorsprünge 16, 17 finden sich rückspringende Bereiche des zweiten Profileinzelteils 3, von denen in Figur 1 nur einer 18 explizit bezeichnet ist, welche zu den genannten Überständen 13 an der Fügefläche 10 des ersten Profileinzelteils 2 komplementär ausgebildet sind.

Weiterhin weist das zweite Profileinzelteil 3 zwei sich im Wesentlichen parallel zueinander erstreckende Rastvorsprünge 19, 20 auf, die an ihrem freien Ende jeweils eine Rastnase 21 bzw. 22 aufweisen, die beim Zusammenfügen der Profileinzelteile 2, 3 in an sich bekannter Weise mit dem bereits erwähnten Absätzen 8, 9 der zentralen Ausnehmung 7 des ersten Profileinzelteils 2 zusammenwirken, um die beiden Profileinzelteile 2, 3 miteinander zu verrasten. Zu diesem Zweck wird das erste Profileinzelteil 2 in Richtung des Pfeils P auf das zweite Profileinzelteil 3 aufgedrückt, worauf weiter unten anhand der Figur 2 noch genauer eingegangen wird.

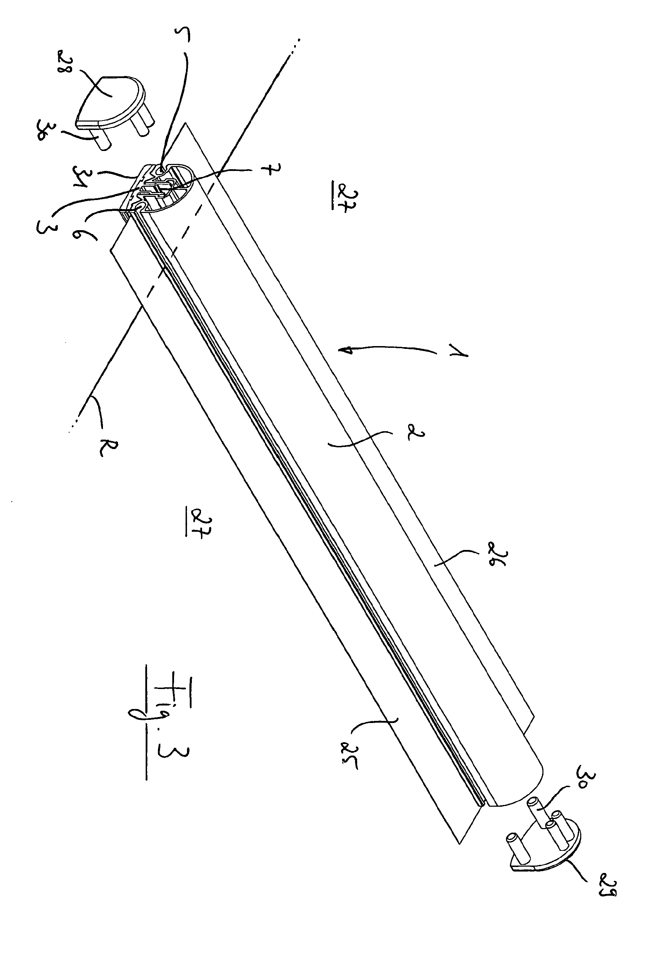

Das zweite Profileinzelteil 3 weist an seiner den Längsvorsprüngen 16, 17 und den Rastvorsprüngen 19, 20 abgewandten Unterseite im Bereich der Außenkontur 14 schwalbenschwanzartig hinterschnittene Ausnehmungen 23, 24 auf, auf deren Funktion weiter unten anhand von Figur 3 noch genauer eingegangen wird.

Weiterhin sind in Figur 1 bei Bezugszeichen 25 und 26 jeweils noch Bahnen einer Schwimmbadabdeckplane dargestellt, welche zum Herstellen einer vollständigen Schwimmbadabdeckung an der Strebe 1 klemmend gehalten werden sollen. Zu diesem Zweck werden die genannten Abdeckbahnen 25, 26 im Bereich der Längsvorsprünge 16, 17 des zweiten Profileinzelteils 3 in den gemäß Figur 1 verbleibenden Zwischenraum zwischen dem ersten Profileinzelteil 2 und dem unteren Profileinzelteil 3 eingebracht. Anschließend werden die Profileinzelteile 2, 3 miteinander verrastet, wie beschrieben, und es ergibt sich die in Figur 2 exemplarisch dargestellte Konfiguration.

In Figur 2 sind aus Gründen der Übersichtlichkeit nicht alle vorstehend anhand der Figur 1 beschriebenen Einzelmerkmale der Strebe 1 explizit bezeichnet, wobei ansonsten gleiche Bezugszeichen gleiche oder gleichwirkende Elemente angeben.

Wie der Figur 2 zu entnehmen ist, greifen im zusammengefügten Zustand des ersten Profileinzelteils 2 und des zweiten Profileinzelteils 3 die Rastnasen 21, 22 der Rastvorsprünge 19 bzw. 20 hinter die Absätze 8, 9 in der zentralen Ausnehmung 7, so dass die beiden Profileinzelteile 2, 3 sicher miteinander verrastet sind. Dabei greifen die Profileinzelteile 2, 3 an ihren jeweiligen Fügeflächen 10 bzw. 15 mit den in Figur 2 aus Gründen der Übersichtlichkeit nicht näher bezeichneten Vorsprüngen und Ausnehmungen 11, 12, 13, 16, 17, 18 (vgl. Figur 1) formschlüssig ineinander, so dass die Abdeckplanenbahnen 25, 26 klemmend zwischen den Profileinzelteilen 2, 3 gehalten sind, ohne dass zu diesem Zweck die entsprechenden Ränder der Bahnen 25, 26 in irgendeiner Weise vorzubereiten wären.

Es kann weiterhin vorgesehen sein, die beiden Profileinzelteile 2, 3 derart auszubilden bzw. ein entsprechendes Werkzeug (nicht gezeigt) vorzusehen, dass die Verrastung aufgehoben und die beiden Profileinzelteile 2, 3 wieder voneinander getrennt werden können, beispielsweise um die Stoffbahnen 25, 26 bei Beschädigung austauschen zu können. Beispielsweise kann zu diesem Zweck mit einem geeigneten Werkzeug gemäß der Darstellung in Figur 1 oder Figur 2 senkrecht zur Blattebene in die zentrale Ausnehmung eingegriffen werden, um die Rastvorsprünge 19, 20 aufeinander zu zu drücken und anschließend das erste Profileinzelteil 2 von dem zweiten Profileinzelteil 3 abzuziehen.

Wie der Fachmann erkennt, ist die Erfindung jedoch keinesfalls auf die vorstehend exemplarisch beschriebenen Ausgestaltungen insbesondere der Fügeflächen 10, 15, des Rastmechanismus und/oder der Außenkonturen 4, 14 beschränkt.

Figur 3 zeigt anhand einer perspektivischen Gesamtdarstellung nochmals eine Ausgestaltung der erfindungsgemäßen Strebe 1 mit erstem 2 und zweitem Profileinzelteil 3, wobei zwischen letzteren wiederum Abdeckplanenbahnen 25, 26 klemmend gehalten sind. Im Randbereich der Strebe 1 ist mittels einer gestrichelten Linie R der Rand eines abzudeckenden Schwimmbeckens angedeutet, wobei entsprechend der wassergefüllte, abzudeckende Bereich des Schwimmbeckens symbolisch mit dem Bezugszeichen 27 bezeichnet ist.

Bezugszeichen 28, 29 bezeichnen Endstücke oder Endkappen zum Verschließen der Strebe 1 an ihren offenen Enden. Entsprechend weisen die Endkappen 28, 29 eine flächige Formgebung auf, die geometrisch im Wesentlichen der gemeinsamen Außenkontur 4, 14 des ersten 2 und zweiten Profileinzelteils 3 entspricht (vgl. Figuren 1 und 2). Die Endkappen 28, 29 weisen angeformte Stifte 30 auf, die zum Halten der Endkappen 28, 29 an der Strebe 1 in die Profileinzelteile 2, 3 eingreifen. Dies geschieht vorzugsweise im Bereich der Nuten 5, 6 sowie in dem Bereich zwischen der Außenkontur 4 des ersten Profileinzelteils 2 und einer die zentrale Ausnehmung 7 der definierenden, nicht näher bezeichneten Innenstruktur des ersten Profileinzelteils 2 (vgl. Figur 1 oder Figur 2).

Um die Strebe 1 gegen Beschädigung durch Reibung auf dem Beckenrand R zu schützen, ist gemäß Figur 3 im Endbereich der Strebe 1 unterhalb des zweiten Profileinzelteils 3 ein plattenförmiges Randauflageteil 31 angeordnet, welches mit entsprechend geformten Vorsprüngen, die in Figur 3 nicht zu erkennen sind, in die Ausnehmungen 23, 24 gemäß Figur 1 oder Figur 2 eingreift. Dazu wird das Randauflageteil 31 vom Ende der Strebe 1 her mit den genannten Vorsprüngen in die Ausnehmungen 23, 24 eingeschoben. Das Randauflageteil 31 besteht zweckmäßigerweise aus einem relativ weichen Material, vorzugsweise Kunststoff, und kann bei Bedarf bzw. Abnutzung leicht ausgetauscht werden.

Die Abdeckplanenbahnen 25, 26 können grundsätzlich jede gewünschte Abmessung senkrecht zur Erstreckung der Strebe 1 aufweisen. Zweckmäßigerweise wird man für die genannte Breite jedoch eine fertigungstechnische Normbreite, beispielsweise 1,3 m, wählen und entsprechend etwa alle 1,3 m eine erfindungsgemäße Strebe 1 vorsehen. Nur am Anfang und/oder Ende der Abdeckung wird dann eine an das Becken angepasste, schmalere Bahn benötigt. Ein wie auch immer geartetes Verbinden von Bahnen, sei es durch Verschweißen, Vernähen oder dergleichen, ist auf diese Weise nicht erforderlich und vereinfacht die Herstellung und Handhabung der so geschaffenen Schwimmbadabdeckung enorm.

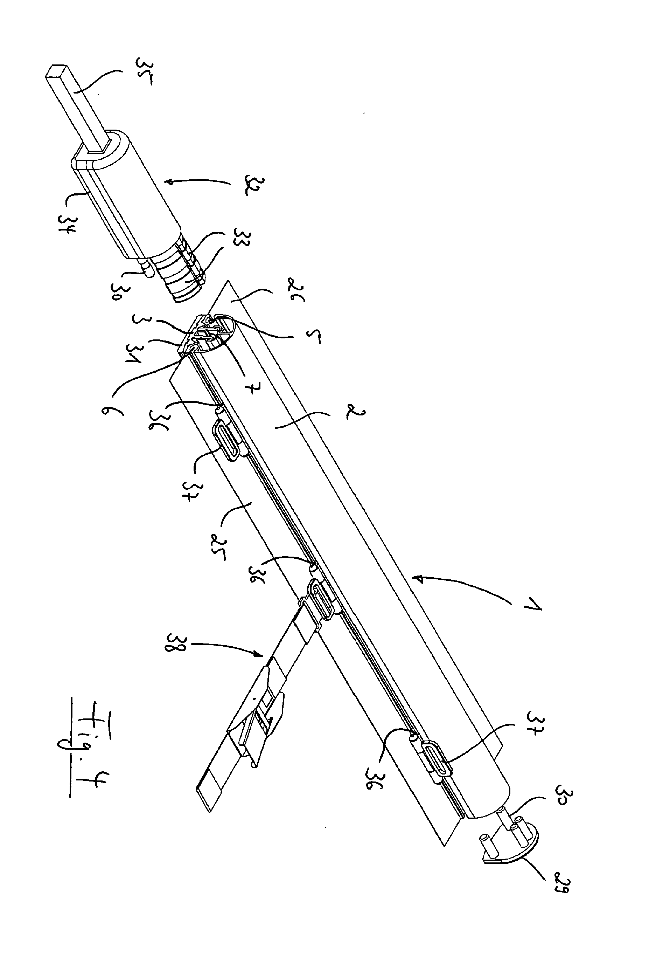

Figur 4 zeigt ebenfalls anhand einer perspektivischen Gesamtansicht eine weitere Ausgestaltung der erfindungsgemäßen Strebe 1, die wiederum zum klemmenden Halten zweier Abdeckplanenbahnen 25, 26 aus einem ersten Profileinzelteil 2 und einem zweiten Profileinzelteil 3 zusammengesetzt ist, wie weiter oben detailliert beschrieben.

An ihrem einen Ende weist die Strebe 1 eine identische Endkappe 29 wie in Figur 3 auf. Die Endkappe bzw. das Endstück 32 am anderen Ende der Strebe 1 ist jedoch abweichend von der Ausgestaltung in Figur 3 ausgebildet, worauf nachfolgend genauer eingegangen wird.

Das Endstück 32 greift wiederum mit angeformten Stiften oder Zapfen 30 in die Nuten 5, 6 des ersten Profileinzelteils 2 ein. Darüber hinaus weist das Endstück 32 weitere angeformte Einsteckmittel 33 zum Einstecken in das erste Profileinzelteil 2 auf, deren Formgebung zumindest teilweise komplementär zu den Innenabmessungen des - wie gesagt - als Hohlprofil ausgebildeten ersten Profileinzelteils 2 ausgebildet sind. An die genannten Strukturen 30, 33 schließt sich der eigentliche Endstückkörper 34 an, welcher außerhalb der Strebe 1 bzw. des ersten Profileinzelteils 2 verbleibt und der vorzugsweise in Kunststoff mit eingegossener Vierkantwelle 35 ausgebildet ist, wobei letztere zum Verbinden mit einer (motorbetriebenen oder manuellen) Aufrollvorrichtung für die Schwimmbadabdeckung dient.

Bei der Ausführungsform gemäß Figur 4 sind in die Nut 6 Nutensteine 36 mit flacher, schwenkbarer Ösenstruktur 37 eingesetzt, wobei die Ösenstruktur 37 zum Einhaken einer Spannvorrichtung 38 für die Schwimmbadabdeckung dient.

Das Verspannen der so geschaffenen Schwimmbadabdeckung erfolgt somit ausschließlich über die Streben 1, so dass ein Einarbeiten von Spanngurten oder dergleichen in die Abdeckplane selbst nicht erforderlich ist. Darüber hinaus kann vorteilhafterweise an quasi beliebigen Stellen der Strebe 1 die Verspannung erfolgen.

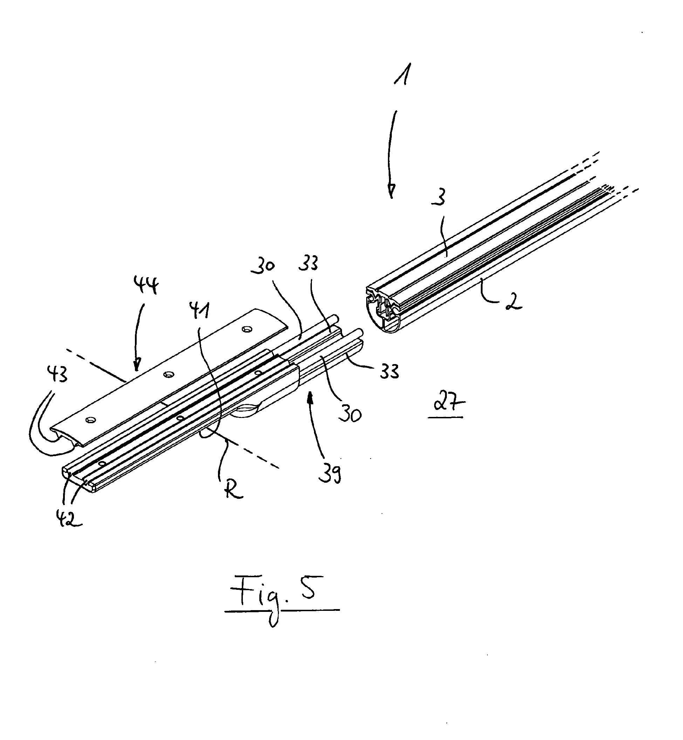

Figur 5 zeigt einen Endabschnitt einer erfindungsgemäßen Strebe 1 mit erstem 2 und zweitem Profileinzelteil 3, wobei vorliegend aus Gründen der Übersichtlichkeit keine Abdeckplanenbahnen zwischen den Profileinzelteilen 2, 3 eingeklemmt sind.

Gemäß der Darstellung in Figur 5 eignet sich die Strebe 1 auch für eine gegenüber der Darstellung in den Figuren 3 und 4 umgedrehte Verwendung, das heißt mit nach unten, zum Beckeninnern 27 hin gedrehtem ersten Profileinzelteil 2.

Zu diesem Zweck ist ein besonders ausgebildetes Endstück 39 vorgesehen, welches mit Strukturen 30, 33 analog zu dem Endstück 32 gemäß Figur 4 in die Strebe 1 eingreift. Zum freien Ende 40 des Endstücks 39 hin nimmt dessen Dicke ab, so dass eine Auflagefläche 41 für das Endstück 39 auf dem wiederum gestrichelt angedeuteten Beckenrand R geschaffen ist. Auf der Oberseite des Endstücks 39 sind in diesem Bereich wiederum Längsausnehmungen 42 vorgesehen, wie mit entsprechenden Vorsprüngen 43 eines im Wesentlichen plattenförmigen Abdeckteils 44 zusammenwirken, um das Abdeckteil 44 mit dem Endstück 39 zu verbinden.

Aus optisch-ästhetischen Gründen weist das Abdeckteil 44 an seiner Oberseite eine etwa der Außenkontur des zweiten Profileinzelteils 3 entsprechende Krümmung auf, wie der Figur 5 andeutungsweise zu entnehmen ist.

Gemäß der Ausgestaltung in Figur 5 steht die Strebe 1 nur wenig über die Abdeckplanenebene hervor, was einen ansprechenden optischen Gesamteindruck für die geschaffene Schwimmbadabdeckung ergibt.

## Patentansprüche

1. Strebe (1) für die Abdeckung einer Öffnung oder Vertiefung mit einer Abdeckplane (25, 26), insbesondere einer textilen Kunststofffolie, insbesondere für eine Schwimmbadabdeckung, wobei die Strebe (1) zum Tragen der Abdeckplane (25, 26) insbesondere über dem Wasser gefüllten Bereich (27) eines Schwimmbeckens vorgesehen ist,
**dadurch gekennzeichnet,**
**dass** die Strebe (1) als mehrteiliges Profilelement ausgebildet ist, von dessen Einzelteilen wenigstens ein erstes (2) und ein zweites (3) im zusammengefügten Zustand eine Klemmvorrichtung zum Klemmen der Abdeckplane (25, 26) bilden.

2. Strebe (1) nach Anspruch 1,
**dadurch gekennzeichnet,**
**dass** das erste (2) und das zweite Profileinzelteil (3) zum Klemmen der Abdeckplane (25, 26) miteinander verrastet sind.

3. Strebe (1) nach Anspruch 1 oder Anspruch 2,
**dadurch gekennzeichnet,**
**dass** das erste Profileinzelteil (2) eine abgerundete, im Querschnitt insbesondere teilkreisförmige Außenkontur (4) aufweist.

4. Strebe (1) nach mindestens einem der Ansprüche 1 bis 3,
**dadurch gekennzeichnet,**
**dass** das zweite Profileinzelteil (3) bezogen auf den zusammengefügten Zustand der Strebe (1) eine insbesondere bezogen auf das erste Profileinzelteil (2) relativ ebene Außenkontur (14) aufweist.

5. Strebe (1) nach mindestens einem der Ansprüche 1 bis 4,
**dadurch gekennzeichnet,**
**dass** das erste Profileinzelteil (2) und/oder das zweite Profileinzelteil (3) wenigstens eine Nut (5, 6) aufweist, die längs der Erstreckung des jeweiligen Profileinzelteils (2, 3) ausgebildet ist.

6. Strebe (1) nach mindestens einem der Ansprüche 1 bis 5,
**dadurch gekennzeichnet,**
**dass** das erste Profileinzelteil (2) und das zweite Profileinzelteil (3) an ihren Fügeflächen (10, 15), die im zusammengefügten Zustand einander zugewandt sind, komplementäre Strukturen (11, 12, 13, 16, 17, 18) zum Klemmen der Abdeckplane (25, 26) aufweisen.

7. Strebe (1) nach mindestens einem der Ansprüche 1 bis 6,
**dadurch gekennzeichnet,**
**dass** zum Klemmen der Abdeckplane (25, 26) an dem ersten (2) oder zweiten Profileinzelteil (3) wenigstens eine Längsausnehmung (11, 12, 18) mit insbesondere dreieckförmigem oder kegelstumpfförmigem Querschnitt und an dem anderen Profileinzelteil (2, 3) wenigstens ein entsprechend komplementärer Längsvorsprung (13, 16, 17) vorgesehen ist.

8. Strebe (1) nach mindestens einem der Ansprüche 1 bis 7,
**dadurch gekennzeichnet,**
**dass** das erste Profileinzelteil (2) und/oder das zweite Profileinzelteil (3) an wenigstens einem Ende als Hohlprofilteil ausgebildet ist und dass ein Endstück (28, 29, 32, 39) zum insbesondere gemeinsamen Verschließen des Profileinzelteils bzw. der Profileinzelteile vorgesehen ist, insbesondere durch Einstecken in das Profileinzelteil bzw. in die Profileinzelteile, insbesondere in die Nut (5, 6) gemäß Anspruch 5.

9. Strebe (1) nach Anspruch 8,
**dadurch gekennzeichnet,**
**dass** das Endstück (28, 29, 32, 39) eine Struktur (35), insbesondere Kantstabstruktur zum Verbinden mit einer Antriebseinheit für die Abdeckung aufweist.

10. Strebe (1) nach Anspruch 8 oder 9,
**dadurch gekennzeichnet,**
**dass** das Endstück (28, 29, 32, 39) eine Auflagefläche (41) zum Auflegen auf einen Rand (R) der Öffnung oder Vertiefung, insbesondere des Schwimmbeckens aufweist.

11. Strebe (1) zumindest nach Anspruch 4,
**dadurch gekennzeichnet,**
**dass** das zweite Profileinzelteil (3) an seiner Außenfläche bezogen auf den zusammengefügten Zustand wenigstens eine Befestigungsstruktur (23, 24), insbesondere eine hinterschnittene Längsausnehmung aufweist, an der ein Randauflageteil (31) befestigt bzw. befestigbar ist.

12. Strebe (1) nach zumindest Anspruch 6,
**dadurch gekennzeichnet,**
**dass** in die Nut (5, 6) eine Anzahl von Nutensteinen (36) eingesetzt bzw. einsetzbar ist, welche eine insbesondere um eine Längsachse des Nutensteins (36) schwenkbare Ösenstruktur (37) zum Einhaken einer Spannvorrichtung (38) für die Abdeckung aufweisen.

13. Strebe (1) nach mindestens einem der Ansprüche 1 bis 12,
**dadurch gekennzeichnet,**
**dass** die Strebe (1) in Aluminium oder einem vergleichbaren Werkstoff ausgebildet ist.

14. Abdeckung mit einer Abdeckplane (25, 26), insbesondere einer textilen
Kunststofffolie, **gekennzeichnet durch** wenigstens eine Strebe (1) nach mindestens einem der Ansprüche 1 bis 13 zum Tragen der Abdeckplane (25, 26) über einer Öffnung oder Vertiefung, insbesondere über dem wassergefüllten Bereich (27) eines Schwimmbeckens.

15. Abdeckung nach Anspruch 14, **gekennzeichnet durch** eine vorzugsweise
regelmäßige Abfolge von Abdeckplanenbahnen (25, 26) und Streben (1), wobei die Breite der Abdeckplanenbahnen (25, 26) gegebenenfalls mit Ausnahme des Abdeckplanenrandes insbesondere ca. 1,3 m beträgt.
